# EUROPÄISCHE PATENTANMELDUNG

(11) **EP 0 767 052 A1**
(43) Veröffentlichungstag der Anmeldung: **09.04.1997**
(21) Anmeldenummer: 96115692.4
(22) Anmeldetag: 01.10.1996
(51) Int. Cl.: B32B 27/08, E02D 31/00, E04B 1/66, E04D 5/10

(54) **Kunststoffdichtungsbahn**

(30) Priorität: 02.10.1995 CH 2818/95; 20.07.1996 CH 1810/96
(71) Anmelder: SARNA PATENT- UND LIZENZ-AG, 6060 Sarnen (CH); DSM N.V., 6411 TE Heerlen (NL)
(72) Erfinder: Bindschedler-Galli, Urs Alexander, 6060 Sarnen (CH); van de Walle, Lucas Evaristus Josephus Maria, 6142 BC Sittard (NL)
(74) Vertreter: Zink-Wild, Markus Peter

(57) **Zusammenfassung**

Die erfindungsgemässe Kunststoffdichtungsbahn, welche eine gegenüber herkömmlichen Kunststoffdichtungsbahnen wesentlich verbesserte biaxiale Dehnung hat, und welche einen Verbund aus einer Oberschicht und einer Unterschicht sowie einer dazwischen liegenden Sperrschicht umfasst, ist dadurch gekennzeichnet, dass
- die Sperrschicht auf der Basis wenigstens eines organischen polymeren Materials aufgebaut ist,
- die Oberschicht und die Unterschicht auf der Basis wenigstens eines solchen organischen polymeren Materials aufgebaut sind, welches im Vergleich zum in der genannten Sperrschicht verwendeten organischen polymeren Material bessere mechanische Eigenschaften hat,
- die genannte Oberschicht und die genannte Unterschicht aus den gleichen oder aus verschiedenen Materialien aufgebaut sind,
- das genannte organische polymere Material für die Sperrschicht derart beschaffen ist, dass es bei einer biaxialen Dehnung der Kunststoffdichtungsbahn nicht beschädigt wird, und
- bei einer biaxialen Dehnung der Kunststoffdichtungsbahn keine Trennung der Schichten auftritt.

Die erfindungsgemässen Kunststoffdichtungsbahnen können zur Abdichtung, Abdeckung, Auskleidung, Isolierung von Deponien, welche zur Aufnahme von flüssigen und festen Abfällen vorgesehen sind, zum Schutze von Gewässern und Grundwasser sowie von Böden, und zum Schutze von Bauwerken, welche in Kontakt mit kontaminierten Medien stehen, verwendet werden.

## Beschreibung

Die vorliegende Erfindung betrifft eine Kunststoffdichtungsbahn, welche eine gegenüber herkömmlichen Kunststoffdichtungsbahnen wesentlich verbesserte biaxiale Dehnung hat, und welche einen Verbund aus einer Oberschicht und einer Unterschicht sowie einer dazwischen liegenden Sperrschicht umfasst.

Die vorliegende Erfindung betrifft auch Verfahren zur Herstellung dieser Kunststoffdichtungsbahn sowie deren Verwendung.

Kunststoffdichtungsbahnen auf der Basis von Ethylen-Homopolymeren und/oder Ethylen-Copolymeren sowie Propylen-Homopolymeren und/oder Propylen-Copolymeren sind bekannt. Siehe beispielsweise die Produkte der Firma National Seal Company in Aurora, IL 60504, USA und Produkte der Firma Montell Polyolefins in I-44100 Ferrara, Italien.

Kunststoffdichtungsbahnen aus PE-HD (Polyethylen-high density) mit einer Sperrschicht aus ausschliesslich gewalzten Aluminiumfolien (etwa 50 bis etwa 250 Mikrometer dick) sind bekannt.

Schon bei geringen biaxialen Dehnungen reisst diese Aluminium-Sperrschicht, und die Sperrfunktion wird erheblich reduziert.

Bei der in DE OS 35 14 383, entsprechend EP 0 199 099 A2, beschriebenen Kunststoffdichtungsbahn müssen die innen liegenden Schichten - Zitat - mindestens annähernd gleiche mechanische Eigenschaften wie die der äusseren Kunststoffbahnen - Zitat Ende - haben.

Die in DE OS 35 14 383 erwähnte - Zitat - hohe Dehnbarkeit - Zitat Ende - betrifft eine monoaxiale Dehnbarkeit, welche nichts mit einer biaxialen Dehnung zu tun hat.

Zur Auskleidung von Deponien werden hauptsächlich Dichtungsbahnen aus PE-HD verwendet.

Kunststoffbahnen dieser Art haben eine geringe biaxiale Dehnung und passen sich wegen ihrer geringen Flexibilität entsprechend schlecht auf dem Abdichtungsträger an.

Wenn der maximale Wert der biaxialen Dehnung überschritten wird, dann reisst die Kunststoffbahn. Dies resultiert darin, dass Schadstoffe durch die entstandenen Risse ins Wasser, in den Boden oder in die Atmosphäre gelangen können.

Herkömmliche Dichtungsbahnen auf der Basis von Polyethylen sollten wegen der hohen Permeationsraten, wie zum Beispiel bei halogenierten Kohlenwasserstoffen, wie etwa Dichlorbenzol, zweckmässig nicht zum Abdichten von Deponien verwendet werden.

Es ist ein Ziel der vorliegenden Erfindung, die oben genannten Nachteile zu überwinden.

Es ist ein weiteres Ziel der vorliegenden Erfindung, eine Kunststoffdichtungsbahn zur Verfügung zu stellen, welche eine die Diffusion von Schadstoffen, wie etwa aromatische und halogenierte Kohlenwasserstoffe, beispielsweise Dichlorbenzol, Dichlormethan, hemmende Sperrschicht aus organischem Material hat.

Diese Kunststoffdichtungsbahn soll eine hohe Flexibilität haben, verbunden mit einer hohen biaxialen Dehnung und einem hohen Relaxationsvermögen.

Es soll insbesondere ein neues, im Gebrauchstemperaturbereich von - 40°C bis + 70°C flexibles Produkt mit einer Dicke (Stärke) von 1,5 mm bis 5 mm zur Verfügung gestellt werden, welches keine Weichmacher oder Bitumen enthält, und eine gute Witterungsbeständigkeit sowie eine gute und einfache Verarbeitbarkeit, insbesondere Verschweissbarkeit mit herkömmlichen Schweisstechniken und Schweissgeräten (Doppelheizkeil-Naht, Extrusionsnaht, Heissgas-Handschweissung, maschinelle Heissgas-Schweissung), sowie eine gute chemische, biologische und Bitumen-Beständigkeit aufweist.

Ebenso soll es keine Schwermetallstabilisatoren enthalten.

Das neue Produkt soll so zusammengesetzt, hergestellt und für die jeweilige Anwendung entsprechend verarbeitbar sein, dass daraus ein sehr gutes Preis/Leistungsverhältnis im Vergleich zum Stand der Technik resultiert.

Für die Anwendung in Unterwasserabdichtungen, beispielsweise Unterwasserdeponien, soll die Dichte dieser Kunststoffdichtungsbahn zwecks einfacherer Verlegung einstellbar sein.

Bei dieser Anwendung soll die Dichte vorzugsweise 1,2 g/cm³ bis 1,4 g/cm³ sein.

Ferner sollen einfache und billige Verfahren zur Herstellung dieses neuen Produktes zur Verfügung gestellt werden.

Diese Erfindung ist durch die Merkmale in den unabhängigen Ansprüchen gekennzeichnet.

Bevorzugte Ausführungsformen sind in den abhängigen Ansprüchen definiert.

Die erfindungsgemässen Kunststoffdichtungsbahnen haben hervorragende Grundeigenschaften, die sich aus der Zusammensetzung der einzelnen Komponenten und dem Herstellungsverfahren ergeben, wie sie in den nachfolgenden Beispielen beschrieben sind.

Zusätzlich werden folgende, für die Erfindung charakteristische Merkmale festgestellt:
- Permeabilität bezüglich Schadstoffen, wie 1,2-Dichlorbenzol, gleich oder kleiner als 0,002 g/10⁴ m²/Jahr bei einer Schadstoffkonzentration von 30 mg/Liter H₂0;
- hervorragende Flexibilität;
- hervorragende thermische Alterungsbeständigkeit;
- gute Witterungsbeständigkeit (bei einem Einsatz von 2,5 % Russanteilen);
- gute chemische und biologische Alterungsbeständigkeit, speziell im Kontakt mit wässrigen Medien, bituminösen Stoffen, Mikroorganismen;
- gute Kälteflexibilität, geringe Versteifung bei tiefen Temperaturen;
- guter Verbund, gute Verschweissung der Schichten innerhalb der Kunststoffdichtungsbahn;
- ökologische Unbedenklichkeit; insbesondere kein Bitumen, keine Weichmacher, keine Schwermetallstabilisatoren, wie etwa Pb, Cd, keine Rauch- und/oder Geruchsbildung bei der Herstellung und der Verarbeitung, rezyklierbar, unbedenkliche Entsorgung durch Deponierung oder Verbrennung;
- gute Verarbeitbarkeit, insbesondere gute Schweissbarkeit für die beschriebenen Anwendungen mit herkömmlichen Schweisstechniken und Schweissgeräten (Heissluft, Heizkeil,etc.).

Die Qualität der Schweissverbindungen zwischen den einzelnen Bahnen zu flächigen Abdichtungen entspricht der DVS-Norm 2203, Teile 1-5 ("Deutscher Verband für Schweisstechnik e.V.").

Weil die erfindungsgemässen Kunststoffdichtungsbahnen flexibel sind, passen sie sich besser dem jeweiligen Untergrund an.

Daraus resultiert ein flächiger, satter Pressverbund zwischen erfindungsgemässen Kunststoffdichtungsbahnen und Untergrund.

Der Vorteil eines flächigen, satten Pressverbundes besteht darin, dass in der erfindungsgemässen Kunststoffdichtungsbahn nur geringe, wenn Überhaupt, Spannungen vorhanden sind.

Es ist möglich, die Sperrschicht mehrlagig aufzubauen. Dabei werden die entsprechenden Sperrschichten mit einem geeigneten Haftvermittler miteinander verbunden.

Im folgenden Teil werden weitere mögliche Verfahren zur Herstellung der erfindungsgemässen Kunststoffdichtungsbahnen genannt:
- Coextrusionsverfahren (Blasen oder Breitschlitzdüse)
- Kombinationen von verschiedenen Verfahrenstechniken.

Auf einem Schmelzwalzenkalander wird auf die Sperrschicht, mit oder ohne Haftvermittler, entweder gleichzeitig on-line oder nacheinander off-line die Oberschicht und die Unterschicht aufgetragen.

Die Sperrschicht, mit oder ohne Haftvermittler, wird auf einer Laminieranlage mit der Oberschicht und mit der Unterschicht laminiert.

Dabei werden die Oberschicht und die Unterschicht entweder auf einem Folienkalander oder auf einer Mono-Extrusionsanlage hergestellt.

Die nachfolgenden Beispiele illustrieren die vorliegende Erfindung.

### Beispiel 1

Zur Herstellung einer Kunststoffdichtungsbahn mit einer Gesamtdicke von 2,5 mm, bei der die Oberschicht und die Unterschicht gleich beschaffen sind, wurden folgende Komponenten in einen gleichlaufenden Doppelschneckenextruder geführt:

| Komponenten | Gew.-% |
|---|---|
| VLDPE (Very low density polyethylene) mit einer Dichte von 0,910 g/cm³ | 62,6 |
| VLDPE mit einer Dichte von 0,914 g/cm³ | 31,3 |

| Compound, bestehend aus | |
|---|---|
| 40 Gew.-% VLDPE (d=0,910 g/cm³) | |
| 20 Gew.-% VLDPE (d=0,914 g/cm³) | |
| 40 Gew.-% Russ (als Pigment und Lichtschutzmittel) | |
| mit einer Dichte von 1,140 g/cm³ | 6,0 |
| Hitzestabilisator | 0,1. |

In diesem Doppelschneckenextruder wurden diese Komponenten plastifiziert, homogen gemischt und über eine Breitschlitzdüse (Arbeitsbreite 1 m) extrudiert. Die Materialdosierung in den Extruder erfolgte über eine Differential-Dosierwaage.

Die Temperatur der aus der Breitschlitzdüse austretenden bahnförmigen Masse betrug 220°C bis 230°C. Der Ausstoss lag bei 130 kg pro Stunde.

Diese bahnförmige Masse wurde von oben in den unteren Spalt eines 3-Walzen-Glättwerkes eingeführt. Gleichzeitig lief von unten über die untere Walze die Sperrschicht mit einer Geschwindigkeit von 1,6 m/Minute ein.

Die Sperrschicht war eine vorgefertigte, 70 Mikrometer dicke Folie aus PVDC (Polyvinylidenchlorid), die beidseitig mit EVA (Ethylen-Vinylacetat-Copolymer) als Haftvermittler beschichtet war (je 25 Mikrometer).

Um eine optimale Haftung zwischen der zu bildenden ersten Schicht (Oberschicht) und der Haftvermittlerschicht zu erhalten, wurde mit Materialvorlage gefahren, um den notwendigen Anpressdruck zu erhalten.

Die Temperatur der unteren Walze betrug 60°C bis 90°C, diejenige der mittleren Walze von 40°C bis 60°C. Ueber den Spalt zwischen der unteren und mittleren Walze wurde die Dicke der Bahn von 1,2 mm eingestellt. Anschliessend wurde die Bahn über Kühlwalzen auf Raumtemperatur abgekühlt und aufgewickelt.

In einem zweiten Arbeitsgang wurde die zweite Schicht (Unterschicht) mit der im ersten Arbeitsgang hergestellten Bahn vollständig verschweisst. Das Plastifizieren, Homogenisieren und Extrudieren erfolgte in der gleichen Art und Weise wie oben beschrieben.

Die aus der Breitschlitzdüse austretende bahnförmige Masse wurde in den unteren Spalt eines 3-Walzen-Glättwerkes eingeführt.

Gleichzeitig lief von unten über die untere Walze die Bahn aus dem ersten Arbeitsgang ein, wobei die Sperrschicht auf die Seite mit der Materialvorlage gerichtet war.

Die Temperatur der unteren Walze betrug 30°C bis 50°C, diejenige der mittleren Walze 50°C bis 80°C. Ueber den Spalt der unteren und mittleren Walze wurde die Dicke der Bahn von 2,5 mm eingestellt.

Anschliessend wurde diese Bahn über Kühlwalzen auf Raumtemperatur abgekühlt, die Ränder wurden geschnitten und die Bahn wurde aufgerollt.

Die so erhaltene Bahn hatte folgende Eigenschaften:

| Prüfung | Norm | Einheit | Wert |
|---|---|---|---|
| Bahnstärke | DIN 53370 | mm | 2,5 |
| Dichte der Bahn | -- | g/cm³ | 0,93 |

| Reissfestigkeit | | | |
|---|---|---|---|
| längs | DIN 53455 | N/mm² | 24 |
| quer | | | 24 |

| Reissdehnung | | | |
|---|---|---|---|
| längs | DIN 53455 | % | 750 |
| quer | | | 750 |

| Streckspannung | | | |
|---|---|---|---|
| längs | DIN 53455 | N/mm² | 7 |
| quer | | | 7 |

| Dehnung bei Streckspannung | | | |
|---|---|---|---|
| längs | DIN 53455 | % | 16 |
| quer | | | 16 |
| Faltbiegung in der Kälte | SIA 280/2 | °C | <-50 |

| Formänderung in der Wärme | | | |
|---|---|---|---|
| längs | SIA 280/3 | % | <1 |
| quer | | | <1 |

| thermische Alterung (70 Tage, 70°C) | | | |
|---|---|---|---|
| - Massenveränderung | SIA 280/7 | % | -0,05 |
| biaxiale Dehnung (Drucktopf-Durchmesser: 180 mm Prüftemperatur:23°C) | -- | % | 180 |
| Permeabilität bezüglich 1,2-Dichlorbenzol (DCB) (c=30 mg / Liter H₂O) | -- | g/10⁴m²/Jahr | 0,002 |
| Weiterreisswiderstand | DIN 53363 | N/mm | 206 |

| Flexibilität (Torsionsmessung) Speichermodul G'[mPa] | | | |
|---|---|---|---|
| T = -20°C | | | 285 |
| T = 0°C | | | 150 |
| T = 23°C | | | 76. |

### Beispiel 2

Analog Beispiel 1 wurden folgende Komponenten verarbeitet:

| Komponenten | Gew.-% |
|---|---|
| VLDPE mit einer Dichte von 0,910 g/cm³ | 31,3 |
| VLDPE mit einer Dichte von 0,914 g/cm³ | 15,6 |

| Compound, bestehend aus | |
|---|---|
| 40 Gew.-% VLDPE (d=0,910 g/cm³) | |
| 20 Gew.-% VLDPE (d=0,914 g/cm³) | |
| 40 Gew.-% Russ (als Pigment und Lichtschutzmittel) | |
| mit einer Dichte von 1,140 g/cm³ | 3,0 |
| Hitzestabilisator | 0,1 |

| Compound, bestehend aus | |
|---|---|
| 20 Gew.-% VLDPE (d=0,910 g/cm³) | |
| 10 Gew.-% VLDPE (d=0,914 g/cm³) | |
| 70 Gew.-% BaSO₄ | |
| mit einer Dichte von 1,955 g/cm³ | 50. |

Die so erhaltene Bahn hatte folgende Eigenschaften:

| Prüfung | Norm | Einheit | Wert |
|---|---|---|---|
| Bahnstärke | DIN 53370 | mm | 2,5 |
| Dichte der Bahn | -- | g/cm³ | 1,246 |

| Reissfestigkeit | | | |
|---|---|---|---|
| längs | DIN 53455 | N/mm² | 18,7 |
| quer | | | 18,7 |

| Reissdehnung | | | |
|---|---|---|---|
| längs | DIN 53455 | % | 500 |
| quer | | | 500 |
| Faltbiegung in der Kälte | SIA 280/2 | °C | <-50 |

| Formänderung in der Wärme | | | |
|---|---|---|---|
| längs | SIA 280/3 | % | <1 |
| quer | | | <1 |

| thermische Alterung (70 Tage, 70°C) | | | |
|---|---|---|---|
| | | | |
| - Massenveränderung | SIA 280/7 | % | -0,05 |
| biaxiale Dehnung (Drucktopf-Durchmesser: 180 mm Prüftemperatur:23°C) | -- | % | 111 |

| Flexibilität (Torsionsmessung) Speichermodul G'[mPa] | | | |
|---|---|---|---|
| T = -20°C | | | 354 |
| T = 0°C | | | 182 |
| T = 23°C | | | 90. |

### Beispiel 3

Analog Beispiel 1 wurden folgende Komponenten verarbeitet:

| Komponenten | Gew.-% |
|---|---|
| VLDPE mit einer Dichte von 0,910 g/cm³ | 31,3 |
| VLDPE mit einer Dichte von 0,914 g/cm³ | 15,6 |

| Compound, bestehend aus | |
|---|---|
| 40 Gew.-% VLDPE (d=0,910 g/cm³) | |
| 20 Gew.-% VLDPE (d=0,914 g/cm³) | |
| 40 Gew.-% Russ (als Pigment und Lichtschutzmittel) | |
| mit einer Dichte von 1,140 g/cm³ | 3,0 |
| Hitzestabilisator | 0,1 |

| Compound, bestehend aus | |
|---|---|
| 20 Gew.-% VLDPE (d=0,910 g/cm³) | |
| 10 Gew.-% VLDPE (d=0,914 g/cm³) | |
| 70 Gew.-% TiO₂ | |
| mit einer Dichte von 2,030 g/cm³ | 50. |

Die so erhaltene Bahn hatte folgende Eigenschaften:

| Prüfung | Norm | Einheit | Wert |
|---|---|---|---|
| Bahnstärke | DIN 53370 | mm | 2,5 |
| Dichte der Bahn | -- | g/cm³ | 1,261 |

| Reissfestigkeit | | | |
|---|---|---|---|
| längs | DIN 53455 | N/mm² | 15 |
| quer | | | 15 |

| Reissdehnung | | | |
|---|---|---|---|
| längs | DIN 53455 | % | 450 |
| quer | | | 500 |
| Faltbiegung in der Kälte | SIA 280/2 | °C | <-50 |

| Formänderung in der Wärme | | | |
|---|---|---|---|
| längs | SIA 280/3 | % | <1 |
| quer | | | <1 |

| thermische Alterung (70 Tage, 70°C) | | | |
|---|---|---|---|
| - Massenveränderung | SIA 280/7 | % | -0,05 |
| biaxiale Dehnung (Drucktopf-Durchmesser: 180 mm Prüftemperatur:23°C) | -- | % | 102 |

| Flexibilität (Torsionsmessung) Speichermodul G'[mPa] | | | |
|---|---|---|---|
| T = -20°C | | | 425 |
| T = 0°C | | | 213 |
| T = 23°C | | | 106. |

## Patentansprüche

1. Kunststoffdichtungsbahn, welche eine gegenüber herkömmlichen Kunststoffdichtungsbahnen wesentlich verbesserte biaxiale Dehnung hat, und welche einen Verbund aus einer Oberschicht und einer Unterschicht sowie einer dazwischen liegenden Sperrschicht umfasst, dadurch gekennzeichnet, dass
- die Sperrschicht auf der Basis wenigstens eines organischen polymeren Materials aufgebaut ist,
- die Oberschicht und die Unterschicht auf der Basis wenigstens eines solchen organischen polymeren Materials aufgebaut sind, welches im Vergleich zum in der genannten Sperrschicht verwendeten organischen polymeren Material bessere mechanische Eigenschaften hat,
- die genannte Oberschicht und die genannte Unterschicht aus den gleichen oder aus verschiedenen Materialien aufgebaut sind,
- das genannte organische polymere Material für die Sperrschicht derart beschaffen ist, dass es bei einer biaxialen Dehnung der Kunststoffdichtungsbahn nicht beschädigt wird, und
- bei einer biaxialen Dehnung der Kunststoffdichtungsbahn keine Trennung der Schichten auftritt.

2. Kunststoffdichtungsbahn nach Anspruch 1, dadurch gekennzeichnet, dass der Verbund zwischen Oberschicht und Sperrschicht, respektive zwischen Unterschicht und Sperrschicht mittels wenigstens einem Haftvermittler erfolgt, und wobei der Haftvermittler für den Verbund von Oberschicht und Sperrschicht unabhängig vom Haftvermittler für den Verbund von Unterschicht und Sperrschicht ausgewählt ist.

3. Kunststoffdichtungsbahn nach einem der Ansprüche 1 bis 2, dadurch gekennzeichnet, dass der Haftvermittler ausgewählt ist aus der Gruppe, bestehend aus
- adhäsiven Polyolefinen,
- adhäsiven Acetatharzen,
- Copolymeren des Vinylacetates,
- adhäsiven Polyurethanen,
- adhäsiven Acrylatharzen, und
- Copolymeren der Acrylester.

4. Kunststoffdichtungsbahn nach einem der Ansprüche 1 bis 3, dadurch gekennzeichnet, dass der Haftvermittler ein mit Maleinsäureanhydrid modifiziertes adhäsives Polyolefin ist.

5. Kunststoffdichtungsbahn nach einem der Ansprüche 1 bis 4, dadurch gekennzeichnet, dass das organische polymere Material für die Sperrschicht ausgewählt ist aus der Gruppe, bestehend aus
- Polyamiden,
- Polyvinylhalogeniden und Polyvinylidenhalogeniden, insbesondere Polyvinylfluorid und Polyvinylidenchlorid,
- Polyethylenterephthalten, gegebenenfalls mit metallischem Aluminium bedampft,
- Ethylenvinylalkoholen, einschliesslich deren Copolymeren,
wobei Polyvinylidenchlorid und Polyvinylfluorid bevorzugt sind.

6. Kunststoffdichtungsbahn nach einem der Ansprüche 1 bis 5, dadurch gekennzeichnet, dass das organische polymere Material für die Oberschicht und die Unterschicht ausgewählt ist aus der Gruppe, bestehend aus
- Polyurethanen,
- Ethylen-Homopolymeren und/oder Ethylen-Copolymeren, insbesondere mit einer Dichte von gleich oder kleiner als 0,920 g/cm³,
- Propylen-Homopolymeren und/oder Propylen-Copolymeren, insbesondere mit einer Dichte von gleich oder kleiner als 0,920 g/cm³,
wobei ein Ethylen-Copolymer mit einer Dichte von 0,900 g/cm³ bis 0,915 g/cm³ bevorzugt ist, und wobei die Comonomeren vorzugsweise α-Olefine mit 4 bis 12, insbesondere 6 bis 10, Kohlenstoffatomen sind.

7. Kunststoffdichtungsbahn nach einem der Ansprüche 1 bis 6, dadurch gekennzeichnet, dass die Oberschicht und/oder die Unterschicht, in Abhängigkeit von der Anwendung, noch wenigstens ein Pigment, insbesondere Titandioxid, lichtbeständige Farbpigmente, und/oder wenigstens einen Stabilisator, insbesondere Lichtschutzmittel, Antioxidantien, Hitzestabilisatoren, und/oder wenigstens einen Füllstoff, insbesondere Kreide, Kaolin, Talkum, Quarzmehl, Bariumsulfat, und/oder wenigstens ein Verarbeitungshilfsmittel, insbesondere Gleitmittel, z.B. Glyzerinmonostearat, enthalten (enthält).

8. Kunststoffdichtungsbahn nach einem der Ansprüche 1 bis 7, dadurch gekennzeichnet, dass die Oberschicht und/oder Unterschicht
- 0 bis 15 Gew.-% Pigment, und/oder
- 0 bis 5 Gew.-% Stabilisator, und/oder
- 0 bis 40 Gew.-% Füllstoff, und/oder
- 0 bis 5 Gew.-% Verarbeitungshilfsmittel,
enthalten (enthält), wobei die Summe aller vorhandenen Komponenten 100 Gew.-% beträgt.

9. Kunststoffdichtungsbahn nach einem der Ansprüche 1 bis 8, dadurch gekennzeichnet, dass bei einer biaxialen Dehnung von 40 % weder die Sperrschicht beschädigt wird noch eine Trennung der Schichten auftritt.

10. Kunststoffdichtungsbahn nach einem der Ansprüche 1 bis 9, dadurch gekennzeichnet, dass sie die folgenden Schichtdicken hat:
- Oberschicht und Unterschicht: je 0,75 mm bis 2,5 mm,
- Sperrschicht: 50 Mikrometer bis 200 Mikrometer.

11. Kunststoffdichtungsbahn nach einem der Ansprüche 1 bis 10, dadurch gekennzeichnet, dass die Breite der Oberschicht und die Breite der Unterschicht auf jeder Seite der Kunststoffdichtungsbahnen grösser ist als die Breite der Sperrschicht, und dass der genannte Grössenunterschied vorzugsweise je mindestens 5 mm beträgt, und dass die Oberschicht mit der Unterschicht im genannten Randbereich miteinander thermisch verschweisst sind.

12. Kunststoffdichtungsbahn nach einem der Ansprüche 1 bis 11, dadurch gekennzeichnet, dass die Oberschicht, die Unterschicht und die Sperrschicht je für sich homogen und einlagig sind.

13. Verfahren zur Herstellung der Kunststoffdichtungsbahnen nach einem der Ansprüche 1 bis 12, dadurch gekennzeichnet, dass man in einem ersten Schritt die jeweils benötigten Rezeptur-Komponenten für die erste Schicht in einem ersten Extruder plastifiziert und homogen mischt und über eine Breitschlitzdüse extrudiert, dann die so erhaltene erste bahnförmige Masse in einem ersten Spalt zwischen zwei Walzen, einen Schmelze-Wulst bildend, unter Einwirkung von Druck mit der einlaufenden Sperrschicht von einer Seite her thermisch verschweisst, und danach im gleichen Arbeitsgang on-line in einem zweiten Schritt die jeweils benötigten Rezeptur-Komponenten für die zweite Schicht in einem zweiten Extruder plastifiziert und homogen mischt und über eine Breitschlitzdüse extrudiert, dann mit der so erhaltenen zweiten bahnförmigen Masse in einem zweiten Spalt zwischen zwei Walzen, einen Schmelze-Wulst bildend, unter Einwirkung von Druck mit der aus dem ersten Schritt erhaltenen, einlaufenden Bahn von der anderen Seite her thermisch verschweisst, und gegebenenfalls die so erhaltene Kunststoffdichtungsbahn kühlt, und/oder prägt, und/oder kaschiert, und/oder schneidet, und/oder wickelt.

14. Verfahren nach Anspruch 13, dadurch gekennzeichnet, dass die Sperrschicht einseitig oder beidseitig mit wenigstens einem Haftvermittler versehen ist.

15. Verfahren zur Herstellung der Kunststoffdichtungsbahnen nach einem der Ansprüche 1 bis 12, dadurch gekennzeichnet, dass man in einem ersten Arbeitsgang die jeweils benötigten Rezeptur-Komponenten für die erste Schicht in einem Extruder plastifiziert und homogen mischt und über eine Breitschlitzdüse extrudiert, dann die so erhaltene erste bahnförmige Masse in einem Spalt zwischen zwei Walzen, einen Schmelze-Wulst bildend, unter Einwirkung von Druck mit der einlaufenden Sperrschicht von einer Seite her thermisch verschweisst und das so erhaltene Produkt kühlt und aufwickelt, und danach in einem zweiten Arbeitsgang off-line die jeweils benötigten Rezepturkomponenten für die zweite Schicht in einem Extruder plastifiziert und homogen mischt und über eine Breitschlitzdüse extrudiert, dann mit der so erhaltenen zweiten bahnförmigen Masse in einem Spalt zwischen zwei Walzen, einen Schmelze-Wulst bildend, unter Einwirkung von Druck die aus dem ersten Arbeitsgang erhaltene, einlaufende Bahn von der anderen Seite her thermisch verschweisst, und gegebenenfalls die so erhaltene Kunststoffdichtungsbahn kühlt, und/oder prägt, und/oder kaschiert, und/oder schneidet, und/oder wickelt.

16. Verfahren nach Anspruch 15, dadurch gekennzeichnet, dass die Sperrschicht einseitig oder beidseitig mit wenigstens einem Haftvermittler versehen ist.

17. Verwendung der Kunststoffdichtungsbahnen nach einem der Ansprüche 1 bis 12
- zur Abdichtung, Abdeckung, Auskleidung, Isolierung von Deponien, welche zur Aufnahme von flüssigen und festen Abfällen vorgesehen sind,
- zum Schutze von Gewässern und Grundwasser sowie von Böden, insbesondere unter und/oder an Verkehrsträgern, wie Autobahnen, Flughäfen, Bahnanlagen, und Industrieanlagen, wie Tankanlagen, Umladeplätze, Produktionsstätten und Lagerhallen,
- zum Schutze von Bauwerken, welche in Kontakt mit kontaminierten Medien stehen, insbesondere kontaminierte Böden oder kontaminierte Wässer.
